# EUROPÄISCHE PATENTANMELDUNG

(11) **EP 4 120 556 A1**
(43) Veröffentlichungstag der Anmeldung: **18.01.2023**
(21) Anmeldenummer: 21185596.0
(22) Anmeldetag: 14.07.2021
(51) Int. Cl.: H02P 23/14, G05B 23/00

(54) **VERFAHREN UND ÜBERWACHUNGSEINRICHTUNG ZUR ZUSTANDSÜBERWACHUNG EINER MASCHINE**

(71) Anmelder: Siemens Aktiengesellschaft, 80333 München (DE)
(72) Erfinder: Dumke, Sascha, 90489 Nürnberg (DE); Heinrich, Veronika, 80339 München (DE); Khalil, Mohamed, 81379 München (DE); Obst, Birgit, 80935 München (DE); Winter, Jens, 37235 Hessisch Lichtenau (DE)

(57) **Zusammenfassung**

Zur Zustandsüberwachung einer Maschine (M) werden fortlaufend aktuelle Betriebsdaten (BD) der Maschine (M) erfasst, anhand derer fortlaufend ein aktuelles Betriebsverhalten einer Maschinenkomponente (Cl, C2) durch ein nebenläufiges Simulationsmodul (SIM) simuliert wird. Weiterhin werden aus dem simulierten Betriebsverhalten fortlaufend eine aktuelle Performanz der Maschinenkomponente (Cl, C2) quantifizierende Performanzwerte (PV) abgeleitet und im Zeitverlauf gespeichert. Darüber hinaus wird regelmäßig anhand einer Vielzahl von früher abgeleiteten Performanzwerten ein Performanz-Normalwert (PN) ermittelt. Weiterhin werden die Betriebsdaten (BD) und/oder die Performanzwerte (PV) dahingehend überwacht, ob ein vorgegebenes erstes Änderungsmuster (CP) auftritt. Infolge einer Detektion des ersten Änderungsmusters (CP) wird dann eine Aktualisierung eines Performanz-Referenzwertes (PR) durch den aktuellen Performanz-Normalwert (PN) veranlasst. Darüber hinaus werden die jeweils aktuellen Performanzwerte (PV) fortlaufend mit dem jeweils aktuellen Performanz-Referenzwert (PR) verglichen. Abhängig vom Vergleichsergebnis wird dann ein aktueller Gesundheitszustand (HS) der Maschinenkomponente (Cl, C2) angezeigt.

## Beschreibung

Beim Betrieb von komplexen Maschinen wird in zunehmendem Maße angestrebt, eine bisher übliche reaktive oder präventive Instandhaltung durch eine am tatsächlichen Gesundheitszustand der Maschine orientierte, dynamische Instandhaltung abzulösen. Bei einer präventiven Instandhaltung wird die Maschine in regelmäßigen Zeitabständen heruntergefahren, überprüft und gewartet. Dabei werden jedoch häufig noch intakte Bauteile ausgetauscht, deren Restlebensdauer noch nicht ausgeschöpft ist. Bei reaktiver Instandhaltung wird die Maschine bei Auftreten einer Fehlfunktion heruntergefahren, repariert und gegebenenfalls gewartet. Eine unerwartete Fehlfunktion und dadurch bedingte Ausfallzeiten können jedoch zu Problemen führen, insbesondere wenn die Fehlfunktion in einer kritischen Betriebsphase auftritt.

Moderne Überwachungseinrichtungen, sogenannte "Condition Monitoring"-Systeme, erlauben dagegen zustandsorientierte Instandhaltungsstrategien, bei denen eine Lebensdauer kritischer Maschinenkomponenten besser ausgenützt und Instandhaltungsmaßnahmen flexibler mit Betriebserfordernissen der Maschine abgestimmt werden können. Insbesondere können durch derartige Überwachungseinrichtungen Belastungen von Maschinenkomponenten oder Bauteilen gemessen und/oder Lastzyklen gezählt werden. Anhand von bekannten Schadensakkumulationsmodellen können dann Restlebensdauern von Maschinenkomponenten oder Bauteilen statistisch abgeschätzt werden, woraus sich wiederum optimierte Wartungszyklen ableiten lassen.

Dabei besteht ein grundsätzliches Problem darin, Indikatoren zu messen oder zu ermitteln, die für eine Belastung oder einen Gesundheitszustand der Maschine aussagekräftig sind. Gerade bei komplexen Maschinen sind jedoch kritische Maschinenkomponenten in vielen Fällen schwer für Messungen zugänglich. So ist es in der Regel technisch sehr aufwändig, Sensoren an einem oft hochbelasteten Rotor eines Motors zu installieren und Sensorsignale von dort zu einer Überwachungseinrichtung zu transportieren.

Es ist bekannt, zur Zustandsüberwachung einer Maschine Messwerte von Sensoren auszuwerten, die an leichter zugänglichen Stellen der zu überwachenden Maschine angebracht sind. Anhand dieser Messwerte kann dann mit Hilfe von physikalischen Simulationsmodellen in vielen Fällen auf die Belastung von weniger zugänglichen Maschinenkomponenten rückgeschlossen werden.

Weiterhin besteht das Problem, dass sich gemessene Belastungen oft in sehr unterschiedlicher Weise auf einen Gesundheitszustand der Maschine auswirken. Insbesondere können diese Auswirkungen je nach Aufstellungsort, Konfiguration, Umbauten, durchgeführten Wartungen und/oder Umgebungsbedingungen der Maschine stark variieren.

Es ist Aufgabe der vorliegenden Erfindung, ein Verfahren und eine Überwachungseinrichtung zur Zustandsüberwachung einer Maschine anzugeben, durch die sich ein Gesundheitszustand der Maschine besser ermitteln lässt.

Gelöst wird diese Aufgabe durch ein Verfahren mit den Merkmalen des Patentanspruchs 1, durch eine Überwachungseinrichtung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Zur Zustandsüberwachung einer Maschine, insbesondere eines Motors, eines Roboters, einer Werkzeugmaschine, einer Fertigungsanlage, einer Turbine, eines 3D-Druckers, einer Verbrennungskraftmaschine und/oder eines Kraftfahrzeugs werden fortlaufend aktuelle Betriebsdaten der Maschine erfasst. Anhand der Betriebsdaten wird fortlaufend ein aktuelles Betriebsverhalten einer Maschinenkomponente durch ein nebenläufiges Simulationsmodul simuliert. Weiterhin werden aus dem simulierten Betriebsverhalten fortlaufend eine aktuelle Performanz der Maschinenkomponente quantifizierende Performanzwerte abgeleitet und im Zeitverlauf gespeichert. Darüber hinaus wird regelmäßig anhand einer Vielzahl von früher abgeleiteten Performanzwerten ein Performanz-Normalwert ermittelt. Weiterhin werden die Betriebsdaten und/oder die Performanzwerte dahingehend überwacht, ob ein vorgegebenes erstes Änderungsmuster auftritt. Infolge einer Detektion des ersten Änderungsmusters wird dann eine Aktualisierung eines Performanz-Referenzwertes durch den aktuellen Performanz-Normalwert veranlasst. Darüber hinaus werden die jeweils aktuellen Performanzwerte fortlaufend mit dem jeweils aktuellen Performanz-Referenzwert verglichen. Abhängig vom Vergleichsergebnis wird dann ein aktueller Gesundheitszustand der Maschinenkomponente angezeigt.

Zum Ausführen des erfindungsgemäßen Verfahrens sind eine Überwachungseinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Überwachungseinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass Performanz-Referenzwerte dynamisch und automatisch an Änderungen von Betriebsbedingungen der Maschine angepasst werden können. Auf diese Weise können betriebsbedingte Performanzveränderungen, beispielsweise aufgrund einer Wartung einzelner Bauteile, einer veränderten Konfiguration oder veränderten Umgebungsbedingungen, die einen Gesundheitszustand oft nicht signifikant beeinflussen, bei der Bewertung des Gesundheitszustandes berücksichtigt werden.

Vorteilhafte Ausführungsformen und Weiterbildungen der Erfindung sind in den abhängigen Ansprüchen angegeben.

Gemäß einer vorteilhaften Ausführungsform der Erfindung kann durch das erste Änderungsmuster ein Schwellwert für eine Schwankungsamplitude, für einen zeitlichen Gradienten und/oder für eine zeitliche Varianz der Performanzwerte und/oder der Betriebsdaten spezifiziert werden. Alternativ oder zusätzlich kann durch das erste Änderungsmuster ein Abstand eines Performanzwerts zum aktuellen Performanz-Referenzwert und/oder eine Zeitdauer, in der eine Schwankungsamplitude der Performanzwerte und/oder der Betriebsdaten unterhalb eines Schwellwerts liegt, spezifiziert werden. Mittels eines solchen ersten Änderungsmusters können gezielt Betriebsphasen detektiert werden, in denen sich eine Performanz nur wenig ändert und die sich deshalb als Referenz-Betriebsphase eignen. Mithin kann eine Aktualisierung des Performanz-Referenzwertes dann veranlasst werden, wenn eine solche Referenz-Betriebsphase detektiert wird.

Nach einer weiteren vorteilhaften Ausführungsform der Erfindung können aktuelle Umgebungsdaten der Maschine fortlaufend erfasst werden. Der Vergleich zwischen den aktuellen Performanzwerten und dem aktuellen Performanz-Referenzwert kann dann abhängig von den aktuellen Umgebungsdaten erfolgen. Als Umgebungsdaten können insbesondere eine Umgebungstemperatur, eine Luftfeuchtigkeit, ein Aufstellungsort, eine Tageszeit, ein Wochentag, ein Kalenderdatum und/oder eine Jahreszeit erfasst werden. Auf diese Weise können Umgebungseinflüsse auf die Performanz bei der Bewertung des Gesundheitszustandes berücksichtigt werden.

Weiterhin können die Umgebungsdaten dahingehend überwacht werden, ob ein vorgegebenes zweites Änderungsmuster auftritt. Infolge einer Detektion des zweiten Änderungsmusters kann dann eine Aktualisierung des Performanz-Referenzwertes durch den aktuellen Performanz-Normalwert veranlasst werden. Durch derartige zweite Änderungsmuster können insbesondere Schwellwerte, Schwankungsamplituden, Gradienten, Varianzen und/oder Zeitdauern im zeitlichen Verlauf der Umgebungsdaten spezifiziert werden. Mittels eines solchen zweiten Änderungsmusters können gezielt Betriebsphasen detektiert werden, in denen sich eine oder mehrere Umgebungsbedingungen der Maschine nur wenig ändern und die sich deshalb als Referenz-Betriebsphase eignen. Mithin kann eine Aktualisierung des Performanz-Referenzwertes dann veranlasst werden, wenn eine derartige Referenz-Betriebsphase detektiert wird.

Analog dazu kann die Maschine dahingehend überwacht werden, ob eine Maschinenkomponente und/oder ein Bauteil der Maschine ausgetauscht oder verändert wird. Infolge einer Detektion eines solchen Austauschs und/oder einer solchen Veränderung kann dann eine Aktualisierung des Performanz-Referenzwertes durch den aktuellen Performanz-Normalwert, gegebenenfalls mit einer vorgegebenen oder berechneten Zeitverzögerung veranlasst werden. Auf diese Weise kann eine Veränderung der Maschine bei der Bewertung des Gesundheitszustandes berücksichtigt werden.

Nach einer weiteren vorteilhaften Ausführungsform der Erfindung kann zur Bestimmung des Performanz-Normalwerts eine Betriebsphase detektiert werden, in der eine Schwankungsamplitude der Performanzwerte unterdurchschnittlich ist und/oder unterhalb eines vorgegebenen Schwellwerts liegt. Zusätzlich oder alternativ kann zur Bestimmung des Performanz-Normalwerts ein gleitender Durchschnitt der Performanzwerte ermittelt werden. Insbesondere kann der Performanz-Normalwert dann auf einen aktuellen gleitenden Durchschnitt der Performanzwerte gesetzt werden, wenn eine Betriebsphase mit geringen Schwankungen der Performanzwerte detektiert wird. Wie oben schon erwähnt, eignet sich eine solche Betriebsphase oft als Referenz-Betriebsphase.

Nach einer vorteilhaften Weiterbildung der Erfindung kann durch ein nebenläufiges Prognosemodul anhand des simulierten Betriebsverhaltens fortlaufend ein zukünftiger Gesundheitszustand der Maschinenkomponente prädiziert werden. Insbesondere kann ein Zeitpunkt eines wahrscheinlichen Schadenseintritts, eine wahrscheinliche Restlebensdauer der Maschinenkomponente und/oder eine zeitliche Entwicklung von Ermüdungserscheinungen prädiziert werden.

Durch das Prognosemodul kann anhand des simulierten Betriebsverhaltens fortlaufend eine Belastung der Maschinenkomponente ermittelt werden. Aus der Belastung kann dann mittels eines dynamischen Belastungsmodells, Verschleißmodells, Degradationsmodells oder Lebensdauermodells der zukünftige Gesundheitszustand prädiziert werden. Für derartige Prädiktionen stehen eine Vielzahl bekannter dynamischer Modelle sowie effiziente numerische Verfahren zu deren Auswertung zur Verfügung. Insbesondere kann eine Kombination aus einer Extrapolation historischer Gesundheitszustände und einem oder mehreren physikalischen Degradationsmodellen verwendet werden. Letztere übertragen Belastungen, wie Spannungen, Vibrationen oder hohe Temperaturen dynamisch auf eine Strukturmechanik und/oder deren Materialeigenschaften. Darüber hinaus können auch empirische Restlebensdauerkurven bei der Prognose berücksichtigt werden.

Vorteilhafterweise kann mittels des dynamischen Belastungsmodells, Verschleißmodells oder Lebensdauermodells eine Prognoseunsicherheit, ein Vertrauensintervall und/oder eine Schadenswahrscheinlichkeit ermittelt werden. Eine Prognoseunsicherheit kann sich hierbei aus einer Ungenauigkeit des oder der verwendeten Prognosemodelle, einer Ungenauigkeit bei der Erfassung der Betriebsdaten sowie aus einer Unsicherheit von Randbedingungen zusammensetzen. Auf diese Weise kann eine Aussagekraft eines prognostizierten Gesundheitszustandes in der Regel erheblich besser eingeschätzt werden.

Nach einer weiteren vorteilhaften Ausführungsform der Erfindung kann im Rahmen des Vergleichs zwischen einem Performanzwert und dem Performanz-Referenzwert ein Abstand zwischen dem Performanzwert und dem Performanz-Referenzwert, ein zeitlicher Gradient des Abstands und/oder eine zeitliche Varianz des Abstands ermittelt werden. Der aktuelle Gesundheitszustand kann dann abhängig vom Abstand, vom Gradienten und/oder von der Varianz angezeigt werden. So kann insbesondere in Phasen mit vergleichsweise hoher Varianz des Abstandes ein aktueller Abstand und/oder ein aktueller Gradient des Abstands bei der Bewertung des Gesundheitszustandes geringer gewichtet werden. Auf diese Weise kann oft vermieden werden, dass kurzfriste Schwankungen des Abstands die Anzeige des Gesundheitszustandes durch Artefakte beeinträchtigen.

Gemäß einer weiteren vorteilhaften Ausführungsform der Erfindung können mehrere Maschinenkomponenten überwacht werden, wobei für jede der Maschinenkomponenten
- das Simulationsmodul ein komponentenspezifisches Simulationsmodell zur Simulation der jeweiligen Maschinenkomponente aufweisen kann,
- das Prognosemodul ein komponentenspezifisches Prognosemodell zur Prognose eines zukünftigen Gesundheitszustands der jeweiligen Maschinenkomponente aufweisen kann,
- komponentenspezifische Performanzwerte abgeleitet werden können,
- ein komponentenspezifischer Performanz-Normalwert durch ein komponentenspezifisches Berechnungsverfahren ermittelt werden kann,
- ein komponentenspezifischer Performanz-Referenzwert verwendet werden kann,
- komponentenspezifische Änderungsmuster vorgegeben werden können,
- ein komponentenspezifischer Vergleich ausgeführt werden kann, und/oder
- ein komponentenspezifischer Gesundheitszustand angezeigt werden kann.

Dabei können insbesondere komponentenspezifische Verarbeitungspipelines mit jeweils einem komponentenspezifischen Simulationsmodell, einer komponentenspezifischen Performanzwertermittlung, einer komponentenspezifischen Referenzwertermittlung, einem komponentenspezifischen Performanzwertvergleich und/oder einem komponentenspezifischen Prognosemodell implementiert sein. Derartige Verarbeitungspipelines können parallel ausgeführt werden und lassen sich besonders einfach um neue Verarbeitungspipelines für zusätzliche Maschinenkomponenten erweitern.

Nach einer weiteren vorteilhaften Ausführungsform der Erfindung kann durch Verknüpfung der komponentenspezifischen Gesundheitszustände ein Gesamt-Gesundheitszustand der Maschine abgeleitet und angezeigt werden. Die Verknüpfung kann vorzugweise durch logische Operatoren erfolgen.

Ein Ausführungsbeispiel der Erfindung wird nachfolgend anhand der Zeichnung näher erläutert. Dabei veranschaulichen jeweils in schematischer Darstellung
- Figur 1: eine Überwachung einer Maschine durch eine erfindungsgemäße Überwachungseinrichtung,
- Figur 2: einen prädizierten Verlauf eines Perfomanzwertes und
- Figur 3: mehrere komponentenspezifische Verarbeitungspipelines einer erfindungsgemäßen Überwachungseinrichtung.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

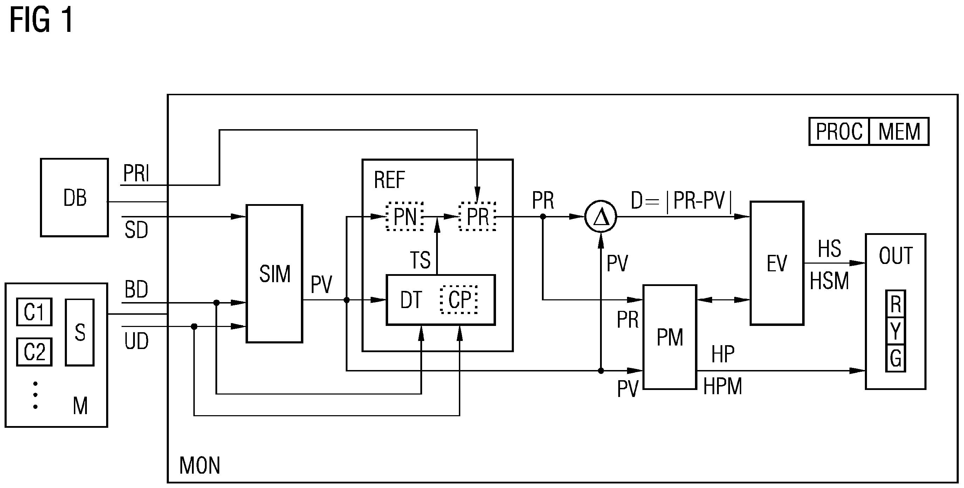

Figur 1 veranschaulicht eine Überwachung einer Maschine M durch eine an die Maschine M gekoppelte erfindungsgemäße Überwachungseinrichtung MON. Die Maschine M kann insbesondere ein Roboter, eine Werkzeugmaschine, eine Fertigungsanlage, eine Turbine, ein 3D-Drucker, eine Verbrennungskraftmaschine und/oder ein Kraftfahrzeug sein oder eine solche Maschine umfassen. Die Maschine M weist mehrere Maschinenkomponenten C1, C2, ... auf, die komponentenspezifisch zu überwachen sind. Aus Übersichtlichkeitsgründen sind in der Zeichnung nur zwei Maschinenkomponenten C1 und C2 explizit dargestellt. Falls die Maschine M ein Elektromotor ist, kann eine jeweilige Maschinenkomponente C1 bzw. C2 beispielsweise ein Rotor, ein Achslager, eine Kühlung, ein Stator, eine Wicklung oder eine Isolierung sein.

Die Überwachungseinrichtung MON ist in Figur 1 extern zur Maschine M dargestellt. Alternativ dazu kann die Überwachungseinrichtung MON auch ganz oder teilweise in die Maschine M integriert sein.

Die Überwachungseinrichtung MON weist einen oder mehrere Prozessoren PROC zum Ausführen von Verfahrensschritten der Erfindung sowie einen oder mehrere Speicher MEM zum Speichern von zu verarbeitenden Daten auf. Derartige Überwachungseinrichtungen MON werden häufig auch als "Condition Monitoring"-Systeme bezeichnet.

Die Maschine M verfügt über eine Sensorik S zum fortlaufenden Messen und/oder Erfassen von Betriebsdaten BD der Maschine M sowie von Umgebungsdaten UD aus einer Umgebung der Maschine M. Außer durch die Sensorik S können Betriebsdaten BD und/oder Umgebungsdaten UD anderweitig erfasst werden.

Als Betriebsdaten BD können insbesondere aktuelle Betriebssignale, Sensordaten und/oder Messwerte erfasst werden, die eine Leistung, eine Drehzahl, ein Drehmoment, eine Bewegungsgeschwindigkeit, eine ausgeübte Kraft, einen Schadstoffausstoß und/oder eine Temperatur einer oder mehrerer Maschinenkomponenten im Zeitverlauf quantifizieren. Analog dazu können die Umgebungsdaten UD z. B. eine Umgebungstemperatur oder eine Luftfeuchtigkeit in einer Umgebung der Maschine M im Zeitverlauf angeben. Weiterhin kann durch die Umgebungsdaten UD ein Aufstellungsort und/oder eine Aufstellungsart der Maschine M, eine Tageszeit, ein Kalenderdatum und/oder eine Jahreszeit spezifiziert werden. Die Betriebsdaten BD und die Umgebungsdaten UD werden fortlaufend erfasst und zur Überwachungseinrichtung MON übermittelt bzw. von dieser erfasst.

Die Überwachungseinrichtung MON verfügt erfindungsgemäß über ein nebenläufiges Simulationsmodul SIM zur Echtzeitsimulation eines aktuellen Betriebsverhaltens der Maschine M und/oder seiner Komponenten, hier C1 und C2, parallel zum laufenden Betrieb der Maschine M. Insbesondere simuliert das Simulationsmodul SIM fortlaufend Belastungen der Maschinenkomponenten C1 und C2. Zum Zweck der Simulation werden die Betriebsdaten BD sowie die Umgebungsdaten UD fortlaufend in das Simulationsmodul SIM eingespeist.

Im vorliegenden Ausführungsbeispiel verfügt das Simulationsmodul SIM über mehrere komponentenspezifische Simulationsmodelle (nicht dargestellt) zur jeweils komponentenspezifischen Simulation der Maschinenkomponente C1 bzw. C2. Ein jeweiliges komponentenspezifisches Simulationsmodell kann dabei vorzugsweise mehrere domänenspezifische Teilmodelle umfassen, z. B. ein mechanisches Teilmodell, ein elektrisches Teilmodell und/oder ein thermisches Teilmodell. Für derartige mechanische, elektrische oder thermische Simulationen stehen eine Vielzahl von effizienten domänenspezifischen Simulationsmodellen zur Verfügung. Typische Implementierungen derartiger Simulationsmodule können durchaus 30 oder 40 Teilmodelle umfassen.

Das Simulationsmodul SIM bzw. seine Simulationsmodelle werden durch Strukturdaten SD der Maschine M aus einer an die Überwachungseinrichtung MON gekoppelten Datenbank DB initialisiert. Durch die Strukturdaten SD werden insbesondere eine Geometrie, physikalische Eigenschaften sowie andere Betriebsparameter von Maschinenelementen der Maschine M sowie insbesondere der Maschinenkomponenten C1 und C2 spezifiziert. Anhand der Strukturdaten SD können die Simulationen mittels der Betriebsdaten BD und der Umgebungsdaten UD durch bekannte Simulationsverfahren ausgeführt werden. Zu diesem Zweck stehen sowohl detaillierte physikalische Simulationsmodelle, wie z. B. sogenannte finite-Elemente-Modelle oder auch effiziente datengetriebene Surrogatmodelle zur Verfügung. Als Surrogatmodell kann insbesondere ein neuronales Netz oder ein anderes Maschinenlernmodell verwendet werden, das vorab mittels eines präzisen physikalischen Simulationsmodells darauf trainiert wurde, dessen Simulationsergebnisse möglichst genau zu reproduzieren. Eine Auswertung derartiger Surrogatmodelle erfordert in der Regel erheblich geringere Rechenressourcen als ein detailliertes physikalisches Simulationsmodell.

Aus dem jeweils simulierten aktuellen Betriebsverhalten der Maschinenkomponenten C1 und C2 wird fortlaufend jeweils ein Performanzwert PV abgeleitet, der eine jeweils aktuelle Performanz der betreffenden Maschinenkomponente C1 bzw. C2 quantifiziert. Die Performanz einer jeweiligen Maschinenkomponente C1 bzw. C2 kann hierbei insbesondere eine Drehzahl, eine Leistung, einen Ressourcenbedarf, einen Ertrag, einen Wirkungsgrad, eine Präzision, einen Schadstoffausstoß, eine Stabilität, Vibrationen, einen Verschleiß, eine Belastung und/oder andere Zielparameter der Maschine M und/oder ihrer Komponenten, hier C1 und C2, betreffen. Insbesondere werden als Performanzwerte PV Indikatoren für eine Belastung der Maschinenkomponenten C1 und C2 ermittelt, wie z. B. Spannungen, Vibrationen, hohe Kräfte, hohe Temperaturen oder hohe Drücke. Durch die Simulation werden somit gewissermaßen virtuelle Sensoren für die Performanz der Maschinekomponenten C1 und C2 realisiert.

Die komponentenspezifischen Performanzwerte PV werden als Zeitreihen gespeichert.

Die Performanzwerte PV werden vom Simulationsmodul SIM zu einem Referenzwertmodul REF der Überwachungseinrichtung MON übermittelt. Das Referenzwertmodul REF dient zur dynamischen Ermittlung und Anpassung von komponentenspezifischen Referenzwerten PR für die Performanzwerte PV. Zur Ermittlung eines jeweiligen komponentenspezifischen Referenzwertes PR wird regelmäßig anhand der übermittelten Performanzwerte PV ein komponentenspezifischer Performanz-Normalwert PN abgeleitet. Der Performanz-Normalwert PN soll als Vergleichsmaßstab für eine jeweilige Performanz in einem Normalzustand oder Soll-Zustand der Maschine M dienen. Zu diesem Zweck wird ein gleitender Durchschnitt, z. B. über mehrere Stunden, Tage oder Wochen, oder ein anderer Mittelwert der Performanzwerte PV bevorzugt in Betriebsphasen mit geringen zeitlichen Schwankungen gebildet und als Performanz-Normalwert PN gespeichert.

Anhand der regelmäßig abgeleiteten Performanz-Normalwerte PN wird der Performanz-Referenzwert PR für eine jeweilige Maschinenkomponente C1 bzw. C2 dynamisch aktualisiert.

Zu Beginn des Betriebs der Maschine M oder zu anderen Initialisierungszeitpunkten wird der Performanz-Referenzwert PR durch einen z. B. aus der Datenbank DB abgerufenen initialen komponentenspezifischen Performanzwert PRI initialisiert. Da sich die Betriebsbedingungen je nach Aufstellungsort, Aufstellungsart, Umgebungseinflüssen, Wartungsarbeiten oder Rekonfigurationen ändern können, wird der Performanz-Referenzwert erfindungsgemäß beim Auftreten von vorgegebenen Änderungsmustern und/oder beim Erkennen von einem Austausch oder einer Veränderung von Maschinenelementen dynamisch aktualisiert.

Zur Detektion von Änderungsmustern sowie zur Detektion eines Austauschs oder einer Veränderung von Maschinenelementen verfügt das Referenzwertmodul REF über einen Detektor DT. Der Detektor DT überwacht insbesondere die Performanzwerte PV und gegebenenfalls die Betriebsdaten BD dahingehend, ob ein vorgegebenes erstes Änderungsmuster auftritt. Weiterhin überwacht der Detektor DT die Umgebungsdaten UD dahingehend, ob ein vorgegebenes zweites Änderungsmuster auftritt. Zu diesem Zweck werden die Umgebungsdaten UD und ggf. die Betriebsdaten BD zum Referenzwertmodul REF übermittelt und in den Detektor DT eingespeist. Das erste und das zweite Änderungsmuster sind in Figur 1 durch das Bezugszeichen CP zusammengefasst. Beide Änderungsmuster CP sind jeweils komponentenspezifisch, d. h. für jede der Komponenten C1 und C2 spezifisch vorgegeben.

Das erste Änderungsmuster spezifiziert insbesondere diejenigen Änderungen der Betriebsdaten BD und/oder Performanzwerte PV, die eine Aktualisierung des Performanz-Referenzwerts PR triggern sollen. Zu diesem Zweck kann das erste Änderungsmuster beispielsweise einen Schwellwert für eine Schwankungsamplitude, einen zeitlichen Gradienten und/oder eine zeitliche Varianz der Betriebsdaten BD und/oder der Performanzwerte PV spezifizieren. Auf diese Weise kann eine Aktualisierung der Performanz-Referenzwertes PR dann ausgelöst werden, wenn eine Schwankungsamplitude, ein Gradient und/oder eine Varianz der Performanzwerte PV und/oder der Betriebsdaten BD über einen vorgegebenen Zeitraum verhältnismäßig gering bleibt und so eine als Referenz taugliche Normalbetriebsphase anzeigt. Dementsprechend kann durch das erste Änderungsmuster auch eine Zeitdauer mit niedriger Schwankungsamplitude spezifiziert werden. Alternativ oder zusätzlich kann durch das erste Änderungsmuster ein Abstand zwischen einem Performanzwert PV und dem Performanz-Referenzwert PR vorgegeben werden, der bei Über- oder Unterschreiten eine Aktualisierung auslöst.

Durch das zweite Änderungsmuster wird vorzugsweise komponentenspezifisch festgelegt, welche Änderungen der Umgebungsdaten UD eine Aktualisierung des Performanz-Referenzwertes PR triggern sollen. Zu diesem Zweck kann das zweite Änderungsmuster analog zum ersten Änderungsmuster einen Schwellwert für eine Schwankungsamplitude, einen zeitlichen Gradienten und/oder eine zeitliche Varianz der Umgebungsdaten UD spezifizieren, um so eine als referenztaugliche Normalbetriebsphase zu definieren.

Sobald der Detektor DT anhand der Betriebsdaten BD, der Umgebungsdaten UD sowie der Performanzwerte PV ein Auftreten der Änderungsmuster CP oder eine Änderung oder einen Austausch eines Maschinenelements detektiert, bildet der Detektor DT ein komponentenspezifisches Triggersignal TS. Durch das komponentenspezifische Triggersignal TS wird für eine jeweilige Maschinenkomponente C1 bzw. C2 eine Aktualisierung des Performanz-Referenzwertes PR für die jeweilige Maschinenkomponente C1 bzw. C2 durch den Performanz-Normalwert PN der jeweiligen Maschinenkomponente C1 bzw. C2 ausgelöst. Das Triggersignal TS kann insbesondere dann gebildet werden, wenn alle Normalzustandsindikatoren zusammentreffen. Darüber hinaus kann eine Aktualisierung auch zu vorgegebenen Zeitpunkten, z.B. nachts oder am Wochenende veranlasst werden.

Der komponentenspezifische Performanz-Referenzwert PR dient als aktuelle Referenz für eine Bewertung eines aktuellen Gesundheitszustands einer jeweiligen Maschinenkomponente C1 bzw. C2. Zu diesem Zweck werden die aktuellen Performanzwerte PV fortlaufend mit dem aktuellen Performanz-Referenzwert PR komponentenspezifisch verglichen. Dabei wird ein aktueller komponentenspezifischer Abstand D zwischen einem aktuellen Performanzwert PV und dem Performanz-Referenzwert PR gebildet. Als Abstand D kann beispielsweise ein Betrag oder ein Quadrat einer Differenz PV - PR oder ein relativer Abstand D = |PV - PR|/PR ermittelt werden.

Der ermittelte Abstand D wird als Vergleichsergebnis in ein Bewertungsmodul EV der Überwachungseinrichtung MON eingespeist. Das Bewertungsmodul EV bewertet anhand der komponentenspezifischen Abstände D, vorzugsweise auch anhand von deren zeitlichen Verläufen komponentenspezifisch einen aktuellen Gesundheitszustand einer jeweiligen Maschinenkomponente C1 bzw. C2. Zu diesem Zweck können vorzugsweise Abstände D zu unterschiedlichen, insbesondere aufeinanderfolgenden Zeitpunkten verglichen werden. So kann ein zeitlicher Gradient aufeinanderfolgender Abstände gebildet werden, um beispielsweise Anstiege der Abstände D zu detektieren und als Verschlechterung eines Gesundheitszustandes zu bewerten. Darüber hinaus kann auch eine zeitliche Varianz der Abstände D ermittelt werden, um damit normale Schwankungen des Abstands D von außergewöhnlichen, auf eine Verschlechterung eines Gesundheitszustandes hindeutenden Schwankungen zu unterscheiden. Darüber hinaus können die Abstände D durch die Bewertungseinrichtung EV mit vorgegebenen oder berechneten Schwellwerten verglichen werden, durch die kritische Gesundheitszustände definiert werden. Darüber hinaus kann das Bewertungsmodul EV die Performanzwerte PV auch direkt mit einem vorgegebenen Performanz-Schwellwert vergleichen, dessen Über- oder Unterschreiten als Schaden zu werten ist; z. B. wenn eine Leistung einer Maschinenkomponente eine zwingend vorgeschriebene Mindestleistung unterschreitet.

Abhängig von den Abständen D ermittelt das Bewertungsmodul EV für jede Komponente C1 und C2 eine aktuelle komponentenspezifische Gesundheitsangabe HS, die den Gesundheitszustand der betreffenden Komponente C1 bzw. C2 spezifiziert. Im vorliegenden Ausführungsbeispiel prüft die Bewertungseinrichtung EV komponentenspezifisch, ob ein jeweiliger Abstand D und/oder dessen zeitlicher Gradient gegebenenfalls unter Berücksichtigung einer zeitlichen Varianz einen ersten komponentenspezifischen Schwellwert sowie einen zweiten komponentenspezifischen Schwellwert überschreitet. Der erste Schwellwert definiert hierbei in komponentenspezifischer Weise eine maximale Abweichung von einem Soll-Verhalten, die als unkritisch angesehen wird. Dagegen definiert der zweite Schwellwert komponentenspezifisch eine Abweichung vom Soll-Verhalten deren Überschreiten eine sofortige oder zeitnahe Benutzeraktion erfordert. Die aktuelle Gesundheitsangabe HS gibt insbesondere an, ob der erste Schwellwert und ob der zweite Schwellwert überschritten wird. Darüber hinaus kann die aktuelle Gesundheitsangabe HS auch den aktuellen Abstand D vom Soll-Verhalten, eine spezifische Schädigung, einen Ausfall und/oder eine Wahrscheinlichkeit eines Auftretens einer Schädigung, einer Fehlfunktion oder eines Ausfalls spezifizieren.

Aus den aktuellen Gesundheitsangaben HS für die einzelnen Komponenten C1 und C2 leitet das Bewertungsmodul EV vorzugsweise noch eine aktuelle Gesamtgesundheitsangabe HSM ab, die einen aktuellen Gesamtgesundheitszustand der Maschine M spezifiziert. Zu diesem Zweck können einzelne aktuelle Gesundheitsangaben HS beispielsweise durch logische Operatoren zur aktuellen Gesamtgesundheitsangabe HSM verknüpft werden. So kann ein kritischer Gesamtzustand der Maschine M angegeben werden, sobald für eine der Maschinenkomponenten C1 oder C2 ein kritischer Gesundheitszustand ermittelt wird.

Die aktuellen Gesundheitsangaben HS für die Komponenten C1 und C2 sowie die aktuelle Gesamtgesundheitsangabe HSM werden vom Bewertungsmodul EV zu einer Ausgabeeinheit OUT der Überwachungseinrichtung MON übermittelt. Die Ausgabeeinheit OUT kann ein Display, eine Alarmeinrichtung, ein Online-Benachrichtigungssystem oder eine andere Form einer Signalisierung oder Nachrichtenausgabe umfassen. Durch die Ausgabeeinheit OUT kann ein Überwachungssignal, ein Alarmsignal, eine Betriebsempfehlung, ein Fehlersignal, ein Diagnosesignal und/oder ein Wartungssignal ausgegeben werden.

Im vorliegenden Ausführungsbeispiel umfasst die Ausgabeeinheit OUT jeweils eine Ampelanzeige zur Anzeige der komponentenspezifischen Gesundheitsangaben HS sowie der Gesamtgesundheitsangabe HSM. Die Ampelanzeigen umfassen jeweils eine grüne Anzeige G, eine gelbe Anzeige Y sowie eine rote Anzeige R. Die grüne Anzeige G wird jeweils angesteuert, wenn der betreffende Abstand D unterhalb des ersten Schwellwerts liegt. In diesem Fall ist der Gesundheitszustand der betreffenden Komponente unkritisch. Entsprechend wird die rote Anzeige R jeweils angesteuert, wenn der betreffende Abstand D oberhalb des zweiten Schwellwerts liegt, was einem kritischen Gesundheitszustand der betreffenden Komponente anzeigt und eine sofortige oder zeitnahe Benutzeraktion erfordert. Entsprechend wird die gelbe Anzeige Y jeweils angesteuert, wenn der betreffende Abstand D zwischen dem ersten und dem zweiten Schwellwert liegt. Auf diese Weise kann eine Beobachtung der entsprechenden Maschinenkomponente empfohlen werden.

Die Anzeige der aktuellen Gesamtgesundheitsangabe HSM kann in analoger Weise durch eine hierfür vorgesehene Ampelanzeige erfolgen.

Die Überwachungseinrichtung MON verfügt weiterhin über ein nebenläufiges Prognosemodul PM mit mehreren komponentenspezifischen Prognosemodellen. In das Prognosemodul PM werden die Performanzwerte PV sowie der Performanz-Referenzwert PR eingespeist. Vorzugsweise werden auch die aktuellen Gesundheitsangaben HS sowie gegebenenfalls die jeweils aktuelle Gesamtgesundheitsangabe HSM vom Bewertungsmodul EV zum Prognosemodul PM übermittelt. Das Prognosemodul PM dient dem Zweck, anhand des durch das Simulationsmodul SIM simulierten Betriebsverhaltens im laufenden Betrieb der Maschine M fortlaufend einen zukünftigen Gesundheitszustand einer jeweiligen Maschinenkomponente C1 bzw. C2 zu prädizieren. Die Prognosemodelle können insbesondere ein dynamisches Belastungsmodell, ein dynamisches Verschleißmodell, ein dynamisches Degradationsmodell oder ein dynamisches Lebensdauermodell umfassen. Zur Anwendung und zur nummerischen Auswertung derartiger Prognosemodelle sind eine Vielzahl von Verfahren verfügbar.

Das Prognosemodul PM ermittelt anhand der Performanzwerte PV fortlaufend eine Belastung der Maschinenkomponenten C1 und C2. Aus der jeweiligen Belastung prognostiziert dann das Prognosemodul PM mittels seiner Prognosemodelle eine zukünftige Entwicklung der Performanz der Maschinenkomponenten C1 und C2 oder eine zeitliche Entwicklung von Ermüdungserscheinungen der Maschinenkomponenten C1 und C2. Damit kann insbesondere eine Restlebensdauer der Maschinenkomponenten C1 und C2 und/oder eine Zeitdauer, bis ein Schaden eintritt, prädiziert werden. Gegebenenfalls kann auch keine zeitliche Entwicklung des Performanz-Referenzwertes PR prädiziert werden.

Zur Ermittlung eines zukünftigen Gesundheitszustandes können prädizierte Performanzwerte PV mit einem aktuellen oder prädizierten Performanz-Referenzwert PR verglichen werden, und es kann jeweils ein Abstand zwischen den prädizierten Performanzwerten PV von dem aktuellen oder prädizierten Performanz-Referenzwert PR ermittelt werden. Aus diesem Abstand kann dann wie oben beschrieben ein zukünftiger Gesundheitszustand für eine jeweilige Maschinenkomponente C1 und C2 abgeleitet werden.

Das Prognosemodul PM generiert damit für eine jeweilige Maschinenkomponente C1 bzw. C2 eine Angabe HP über einen zukünftigen Gesundheitszustand dieser Maschinenkomponente. Weiterhin wird durch das Prognosemodul PM eine Angabe HPM über einen zukünftigen Gesamtgesundheitszustand der Maschine M generiert und zusammen mit den komponentenspezifischen Angaben HP zur Ausgabeeinheit OUT übermittelt. Dort können die prognostizierten Angaben HP und HPM analog zu den aktuellen Angaben HS und HSM durch Ampelanzeigen angezeigt werden. Die Angabe HPM kann dabei, wie oben im Zusammenhang mit den aktuellen Gesundheitsangaben HS und HSM beschrieben, durch Verknüpfung der komponentenspezifischen Angaben HP bestimmt werden.

Die Angaben HP und HPM können vorzugsweise für einen oder mehrere in der Zukunft liegenden Zeitabstände ermittelt werden.

Zusätzlich zu den Prognosen über zukünftige Gesundheitszustände ermittelt das Prognosemodul PM vorzugsweise auch noch eine Prognoseunsicherheit, ein Vertrauensintervall und/oder eine Schadenswahrscheinlichkeit. Bei der Ermittlung der vorstehenden Größen können insbesondere eine Unsicherheit von physikalischen Randbedingungen oder Messungenauigkeiten sowie eine intrinsische Ungenauigkeit der Simulationsmodelle berücksichtigt werden.

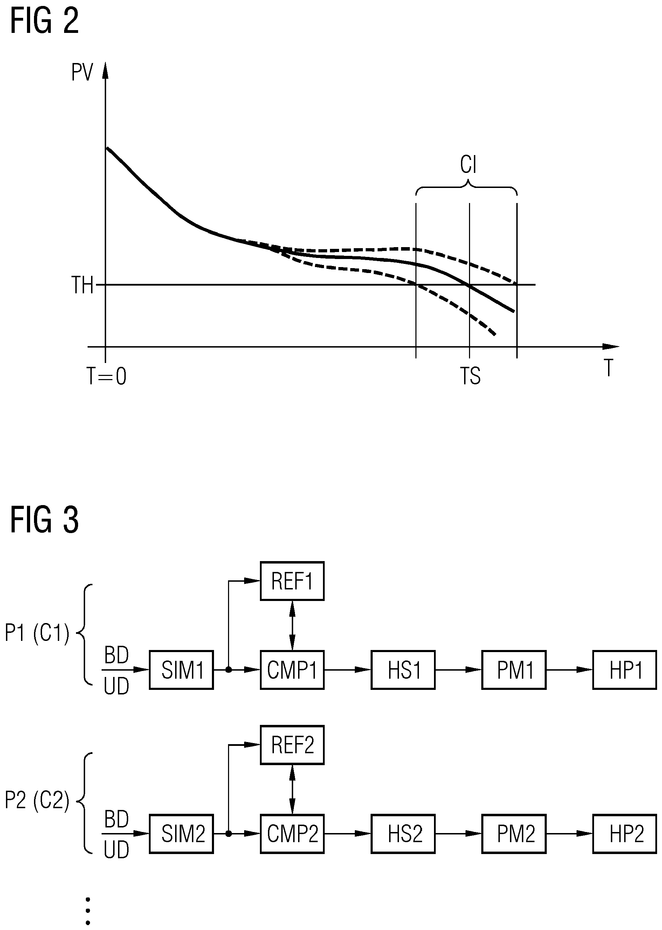

Figur 2 veranschaulicht einen durch das Prognosemodul PM prädizierten Verlauf eines Performanzwertes PV. Der prädizierte Verlauf ist dabei gegen die Zeit T aufgetragen. Der Zeitpunkt T=0 bezeichnet hierbei eine jeweils aktuelle Zeit, während rechts davon zukünftige Zeitpunkte aufgetragen sind.

Während der prädizierte Verlauf des Performanzwertes PV durch eine durchgezogene Linie veranschaulicht wird, ist eine Unsicherheit der zeitlichen Prognose durch strichlierte Linien angedeutet. Weiterhin ist ein Performanz-Schwellwert TH eingetragen, dessen Unterschreiten durch den Performanzwert PV als Schaden zu werten sei. Der prognostizierte Verlauf des Performanzwertes PV unterschreitet den Performanz-Schwellwert TH zum Zeitpunkt TS, der damit als wahrscheinlicher Zeitpunkt eines Schadenseintritts bestimmt werden kann. Anhand des Verlaufs der Prognoseunsicherheit kann weiterhin ein Vertrauensintervall oder Konfidenzintervall CI ermittelt werden, in dem der Schaden höchstwahrscheinlich oder mit vorgegebener Wahrscheinlichkeit eintritt. Das Vertrauensintervall CI kann hierbei aus den Schnittpunkten der strichlierten Verläufe mit dem Performanz-Schwellwert TH ermittelt werden.

Ein jeweiliges komponentenspezifisches Vertrauensintervall CI kann vorzugsweise zusammen mit den Angaben HP über einen zukünftigen Gesundheitszustand einer jeweiligen Komponente angezeigt werden.

Figur 3 zeigt mehrere komponentenspezifische Verarbeitungspipelines P1 und P2 einer erfindungsgemäßen Überwachungseinrichtung. Die Verarbeitungspipeline P1 dient zur Überwachung eines Gesundheitszustands der Maschinenkomponente C1 während die Verarbeitungspipeline P2 zur Überwachung eines Gesundheitszustands der Maschinenkomponente C2 dient. In beide Verarbeitungspipelines P1 und P2 werden gegebenenfalls komponentenspezifische Betriebsdaten BD sowie Umgebungsdaten UD eingespeist.

Die Verarbeitungspipeline P1 umfasst ein Simulationsmodul SIM1 zur nebenläufigen Simulation eines aktuellen Betriebsverhaltens der Maschinenkomponente C1. Weiterhin ist eine für die Maschinenkomponente C1 spezifische Referenzwertermittlung REF1 vorgesehen. Darüber hinaus führt die Verarbeitungspipeline P1 einen für die Maschinenkomponente C1 spezifischen Vergleich CMP1 der für diese Komponente C1 spezifischen Performanzwerte mit dem für diese Komponente C1 spezifischen Performanz-Referenzwert aus. Die Referenzwertermittlung REF1 und insbesondere die Aktualisierung des betreffenden Performanz-Referenzwertes wird wie oben beschrieben komponentenspezifisch ausgeführt. Abhängig vom komponentenspezifischen Vergleichsergebnis wird ein für die Maschinenkomponente C1 spezifischer aktueller Gesundheitszustand HS1 ermittelt. Weiterhin wird durch ein für die Maschinenkomponente C1 spezifisches Prognosemodell P1 ein für diese Komponente C1 spezifischer zukünftiger Gesundheitszustand HP1 prädiziert.

In analoger Weise arbeitet die für die Maschinenkomponente C2 spezifische Verarbeitungspipeline P2.

Die Verarbeitungspipelines P1 und P2 werden im laufenden Betrieb der Maschine M parallel und in Echtzeit ausgeführt. Aufgrund der Separation der Verarbeitungspipelines, hier P1 und P2, für die einzelnen Komponenten, hier C1 und C2, lässt sich die Überwachungseinrichtung MON auf besonders einfache Weise um eine Überwachung weiterer Maschinenkomponenten erweitern.

## Patentansprüche

1. Computerimplementiertes Verfahren zur Zustandsüberwachung einer Maschine (M), wobei
a) aktuelle Betriebsdaten (BD) der Maschine (M) fortlaufend erfasst werden,
b) anhand der Betriebsdaten (BD) fortlaufend ein aktuelles Betriebsverhalten einer Maschinenkomponente (C1, C2) durch ein nebenläufiges Simulationsmodul (SIM) simuliert wird,
c) aus dem simulierten Betriebsverhalten fortlaufend eine aktuelle Performanz der Maschinenkomponente (C1, C2) quantifizierende Performanzwerte (PV) abgeleitet und im Zeitverlauf gespeichert werden,
d) regelmäßig anhand einer Vielzahl von früher abgeleiteten Performanzwerten ein Performanz-Normalwert (PN) ermittelt wird,
e) die Betriebsdaten (BD) und/oder die Performanzwerte (PV) dahingehend überwacht werden, ob ein vorgegebenes erstes Änderungsmuster (CP) auftritt,
f) infolge einer Detektion des ersten Änderungsmusters (CP) eine Aktualisierung eines Performanz-Referenzwertes (PR) durch den aktuellen Performanz-Normalwert (PN) veranlasst wird,
g) die jeweils aktuellen Performanzwerte (PV) fortlaufend mit dem jeweils aktuellen Performanz-Referenzwert (PR) verglichen werden, und
h) abhängig vom Vergleichsergebnis ein aktueller Gesundheitszustand (HS) der Maschinenkomponente (C1, C2) angezeigt wird,

2. Verfahren nach Anspruch 1, **dadurch gekennzeichnet,**
**dass** durch das erste Änderungsmuster (CP)
- ein Schwellwert für eine Schwankungsamplitude, für einen zeitlichen Gradienten und/oder für eine zeitliche Varianz der Performanzwerte (PV) und/oder der Betriebsdaten (BD) spezifiziert wird,
- ein Abstand eines Performanzwerts (PV) zum aktuellen Performanz-Referenzwert (PR) spezifiziert wird und/oder
- eine Zeitdauer spezifiziert wird, in der eine Schwankungsamplitude der Performanzwerte (PV) und/oder der Betriebsdaten (BD) unterhalb eines Schwellwerts liegt.

3. Verfahren nach einem der vorhergehenden Ansprüche, **dadurch gekennzeichnet,**
**dass** aktuelle Umgebungsdaten (UD) der Maschine (M) fortlaufend erfasst werden, und
**dass** der Vergleich zwischen den aktuellen Performanzwerten (PV) und dem aktuellen Performanz-Referenzwert (PR) abhängig von den aktuellen Umgebungsdaten (UD) erfolgt.

4. Verfahren nach einem der vorhergehenden Ansprüche, **dadurch gekennzeichnet,**
**dass** aktuelle Umgebungsdaten (UD) der Maschine (M) fortlaufend erfasst werden,
**dass** die Umgebungsdaten (UD) dahingehend überwacht werden, ob ein vorgegebenes zweites Änderungsmuster auftritt, und
**dass** infolge einer Detektion des zweiten Änderungsmusters eine Aktualisierung des Performanz-Referenzwertes (PR) durch den aktuellen Performanz-Normalwert (PN) veranlasst wird.

5. Verfahren nach einem der vorhergehenden Ansprüche, **dadurch gekennzeichnet,**
**dass** die Maschine (M) dahingehend überwacht wird, ob eine Maschinenkomponente (C1, C2) und/oder ein Bauteil der Maschine (M) ausgetauscht oder verändert wird, und
**dass** infolge einer Detektion eines solchen Austauschs und/oder einer solchen Veränderung eine Aktualisierung des Performanz-Referenzwertes (PR) durch den aktuellen Performanz-Normalwert (PN) veranlasst wird.

6. Verfahren nach einem der vorhergehenden Ansprüche, **dadurch gekennzeichnet,**
**dass** zur Bestimmung des Performanz-Normalwerts (PN)
- eine Betriebsphase detektiert wird, in der eine Schwankungsamplitude der Performanzwerte (PV) unterdurchschnittlich ist und/oder unterhalb eines vorgegebenen Schwellwerts liegt, und/oder
- ein gleitender Durchschnitt der Performanzwerte (PV) ermittelt wird.

7. Verfahren nach einem der vorhergehenden Ansprüche, **dadurch gekennzeichnet,**
**dass** durch ein nebenläufiges Prognosemodul (PM) anhand des simulierten Betriebsverhaltens fortlaufend ein zukünftiger Gesundheitszustand (HP) der Maschinenkomponente (C1, C2) prädiziert wird.

8. Verfahren nach Anspruch 7, **dadurch gekennzeichnet,**
**dass** durch das Prognosemodul
- anhand des simulierten Betriebsverhaltens fortlaufend eine Belastung der Maschinenkomponente (C1, C2) ermittelt wird, und
- aus der Belastung mittels eines dynamischen Belastungsmodells, Verschleißmodells oder Lebensdauermodells der zukünftige Gesundheitszustand (HS) prädiziert wird.

9. Verfahren nach Anspruch 8, **dadurch gekennzeichnet,**
**dass** mittels des dynamischen Belastungsmodells, Verschleißmodells oder Lebensdauermodells eine Prognoseunsicherheit, ein Vertrauensintervall (CI) und/oder eine Schadenswahrscheinlichkeit ermittelt wird.

10. Verfahren nach einem der vorhergehenden Ansprüche **dadurch gekennzeichnet,**
**dass** im Rahmen des Vergleichs zwischen einem Performanzwert (PV) und dem Performanz-Referenzwert (PR) ein Abstand (D) zwischen dem Performanzwert (PV) und dem Performanz-Referenzwert (PR), ein zeitlicher Gradient des Abstands (D) und/oder eine zeitliche Varianz des Abstands (D) ermittelt wird, und
**dass** der aktuelle Gesundheitszustand (HS) abhängig vom Abstand (D), vom Gradienten und/oder von der Varianz angezeigt wird.

11. Verfahren nach einem der vorhergehenden Ansprüche, **dadurch gekennzeichnet,**
**dass** mehrere Maschinenkomponenten (C1, C2) überwacht werden, wobei für jede der Maschinenkomponenten (C1, C2)
- das Simulationsmodul (SIM) ein komponentenspezifisches Simulationsmodell (SIM1, SIM2) zur Simulation der jeweiligen Maschinenkomponente (C1, C2) aufweist,
- komponentenspezifische Performanzwerte abgeleitet werden,
- ein komponentenspezifischer Performanz-Normalwert durch ein komponentenspezifisches Berechnungsverfahren ermittelt wird,
- ein komponentenspezifischer Performanz-Referenzwert verwendet wird,
- komponentenspezifische Änderungsmuster vorgegeben werden,
- ein komponentenspezifischer Vergleich ausgeführt wird, und/oder
- ein komponentenspezifischer Gesundheitszustand (HS1, HS2) angezeigt wird.

12. Verfahren nach Anspruch 11, **dadurch gekennzeichnet,**
**dass** durch Verknüpfung der komponentenspezifischen Gesundheitszustände (HS1, HS2) ein Gesamt-Gesundheitszustand (HSM) der Maschine (M) abgeleitet und angezeigt wird.

13. Überwachungseinrichtung (MON) zur Zustandsüberwachung einer Maschine (M), eingerichtet zum Ausführen eines Verfahrens nach einem der vorhergehenden Ansprüche.

14. Computerprogrammprodukt eingerichtet zum Ausführen eines Verfahrens nach einem der Ansprüche 1 bis 12.

15. Computerlesbares Speichermedium mit einem Computerprogrammprodukt nach Anspruch 14.
